# EUROPEAN PATENT SPECIFICATION

(11) **EP 4 510 444 B1**
(45) Date of publication and mention of the grant of the patent: **15.07.2026**
(21) Application number: 24194492.5
(22) Date of filing: 14.08.2024
(51) Int. Cl.: H02S 20/30, H02S 20/10

(54) **RETRACTABLE SOLAR PHOTOVOLTAIC PANEL MOUNTING STRUCTURE**
EINZIEHBARE MONTAGESTRUKTUR FÜR SOLARFOTOVOLTAISCHE TAFEL
STRUCTURE DE MONTAGE DE PANNEAU PHOTOVOLTAÏQUE SOLAIRE RÉTRACTABLE

(30) Priority: 14.08.2023 DK PA202370410
(43) Date of publication of application: 19.02.2025
(73) Proprietor: European Energy A/S, 2860 Søborg (DK)
(72) Inventor: ANDERSEN, Mads Lykke, 2860 Søborg (DK); BRASK, Anders, 2860 Søborg (DK); NIELSEN, Peter Glintvad, 2860 Søborg (DK); NIELSEN, Jacob Juul, 2860 Søborg (DK)
(74) Representative: Guardian IP Consulting I/S

(56) References cited:
- CN-U- 214 853 124
- CN-U- 218 041 270
- KR-B1- 102 475 751

## Description

### Field of the invention

The present invention relates generally to solar photovoltaic panel mounting structures and methods of installing or servicing solar photovoltaic panel mounting structures, in particular solar photovoltaic panel mounting structures comprising taller and/or heavier solar photovoltaic panels.

### Background

The use of solar photovoltaic (PV) panels is ever increasing in order to supply electricity based on renewable energy sources. Such solar PV panels are often arranged in smaller or larger arrays, grids, layouts, etc., often also referred to as solar parks, solar farms, etc. A support structure assembly supports the solar PV panel(s) on a surface.

The term "solar photovoltaic systems", or "solar PV systems", is used to refer to any system that converts sunlight into electricity using solar panels or collectors. "Solar collectors" typically refer to devices that capture solar thermal energy for heating purposes, while "solar panels" refer to devices that convert sunlight directly into electricity using photovoltaic cells. In general usage, the term "solar PV systems" is commonly used to encompass both technologies. Similarly, the term "solar photovoltaic panel" or "solar PV panel" is used to refer to any of solar panels, solar collectors, or a combination of the two, such as a type of hybrid solar PV panel.

In spite of many improvements made in this area, a solar PV panel will typically only convert about 15 - 20 % of the received solar energy into electricity even under the best of circumstances. Future advancements of current solar PV panel technology may, and probably will, improve further on this, but possibly not by a truly significant amount. As the energy source is free, a typical solution to increase energy output is e.g. to install more solar PV panels and/or to use larger solar PV panels.

An option is also making use of the AgriPV concept in which solar PV panels are installed on agricultural land thus using the land for both growing crops and producing energy. The AgriPV concept, however, brings about new challenges as the surface which must support the mounting structure for the solar PV panels may be uneven and soft. CN 214 853 124 U relates to a solar agricultural greenhouse wherein the solar panel can be raised and lowered for servicing using a driving device.

### Summary

It remains desirable to improve solar PV panels and the installation and maintenance of solar PV panels.

Generally, improved installation and maintenance of solar PV panels would be advantageous, such as an approach allowing increased efficiency, flexibility, reduced cost, reduced complexity, increased safety, and/or improved performance would be advantageous.

For installation and maintenance of constructions, where a high degree of safety is wanted, it is particularly desirable to have a reliable method of installation and maintenance in place.

Various aspects of embodiments of a solar PV panel mounting structure, embodiments of methods of installation of same, and embodiments of methods of servicing same as disclosed herein address one or more of the above needs and/or other needs that exist in the field.

It is thus an object to provide a solar PV panel mounting structure that facilitates the installation and maintenance of solar PV panels, in particular of large solar PV panels.

Additionally, an objective is to provide this in a cost-effective, simple, safe, and/or readily scalable way.

An aspect of the invention is defined in claim 1.

Accordingly, in one aspect, one or more of these objects is/are achieved at least to an extent by a solar photovoltaic (PV) panel mounting structure comprising one or more solar PV panels and a support structure assembly that is configured to support, directly or indirectly, the one or more solar PV panels on a surface, e.g. on the ground, a foundation, etc., where the solar PV panel mounting structure is located. The support structure assembly comprises one or more support structures. The support structure assembly is further configured to have a plurality of elevation modes (e.g. at least two modes or more than two), where each elevation mode comprises the one or more solar PV panels being at an elevation above the surface that is different from their elevation in the other elevation mode(s). The plurality of elevation modes comprises: an operational mode in which the support structure assembly is in a configuration suitable for normal operation of the solar PV panel mounting structure, and a service mode in which the support structure assembly is in a configuration suitable for installation and/or maintenance of the solar PV panel mounting structure such as installation and/or
maintenance of the one or more solar PV panels. The support structure assembly comprises an elevation construct, the elevation construct configured to change the height of one or more of the one or more support structures so as to change the elevation of the one or more solar PV panels, and a lifting installation configured for temporary installation of lifting equipment, wherein the elevation construct, the lifting installation, and the temporary lifting equipment are configured to change the elevation of the one or more solar PV panels.

In at least some embodiments, the solar photovoltaic PV mounting structure is stationary/non-mobile (once installed). In at least some embodiments, the one or more solar PV panels is part of, and keeps being part of, the solar PV panel mounting structure in all modes (unless a solar PV panel is to be replaced).

In some embodiments, the one or more support structures comprise a first support structure and a second support structure, the first support structure being configured to support at least part of the second support structure during normal operation, and the second support structure being configured to support the one or more solar PV panels.

The first support structure may comprise support legs, struts, beams, rods, bars, piles, etc. configured to support the second support structure. The first support part may e.g. be made of or comprise a wooden, metallic, or other suitable material. For example, the first support structure may comprise one or more piles configured for being rammed into the surface on which the solar PV panel mounting structure is located.

The second support structure may e.g. be a frame or similar that one or more solar PV panels is attached to, on, or in. In some embodiments, the second support structure comprises one or more longitudinal structures and one or more transverse beams coupled to the one or more longitudinal structures.

In some embodiments, the first and the second support structures may be integrated with each other. In other embodiments, the first and the second support parts are distinct from each other but are then secured, e.g. coupled, welded, or fixed in some way, to each other. The second support structure may e.g. simply rest on or be supported by the first support structure. At least in some embodiments, it is not intended, necessary, or e.g. even possible to separate the second support structure (or the PV panels) from the first support structure or from the overall solar photovoltaic PV mounting structure during normal use (all available modes).

A stabilising support structure may be positioned, at least partially, under the first support structure. The stabilising support structure may e.g. be made of concrete or similar resistant material, such as a material that is resistant to one or more of fire, frost, or water.

In some embodiments, the support structure assembly comprises a torque-transfer drive, such as e.g. a slewing drive, a belt drive, a chain drive, a gear drive, a direct drive, a hydraulic drive, etc., configured for tilting of the second support structure around one or more axes. In some embodiments, the torque-transfer drive is coupled to the second support structure. In some embodiments, the torque-transfer drive is couple to the one or more of solar PV panels. The torque-transfer drive may be comprised in a solar tracking device coupled to or comprised in the support structure assembly and configured to orient the one or more solar PV panels towards the sun. The solar photovoltaic (PV) panel mounting structure may be a single- or dual-axis solar tracker.

The one or more solar PV panels may be arranged in a suitable layout, array, grid, etc. as generally known. In some embodiments, any of the two dimensions of an area spanned by one or more of the one or more solar PV panels is equal to or larger than 2 meters, such as larger than 3 meters, such as larger than 4 meters, such as larger than 5 meters. The area is spanned by the side of the one or more solar PV panels comprising an upward-facing, i.e. sun-facing side, i.e. the side that is configured to receive direct sunlight. In bifacial solar PV panels both the upward-facing side and downward-facing side are active in that while the upward-facing side receives direct sunlight, the downward-facing side is configured to receive diffuse and/or ground-reflected light. The area spanned by one or more of the one or more solar PV panels may have one dimension that is significantly larger than the other. For example, the area spanned by one or more of the one or more solar PV panels may be a substantially rectangular area. For example, the area may be spanned by a solar PV panel module comprising two-by-seven solar PV panels, i.e. an array with two solar PV panels along one direction and seven solar PV panels along another, usually orthogonal, direction. The solar PV panel mounting structure may comprise one or more solar PV panel arrangements, such as one or more solar PV panel modules.

In some embodiments (where the solar PV panels are configured to tilt around an axis), the operating distance from ground to solar panels at zero degrees tilting is about 2.5 meters or more than about 2.5 meters.

Each solar PV panel is often one or more of: heavy, delicate, or difficult to handle due to their size. In addition, it is often desirable to arrange for the one or more solar PV panels to be at a certain height during operation. As the area spanned by the one or more solar PV panels becomes larger, the more difficult it becomes to install and service the solar PV panel(s).

A solar PV panel mounting structure is often configured such that the minimum distance between any solar PV panel and the ground is at least half a meter or more to avoid the solar PV panel being overshadowed by objects in the environment around the solar PV panel mounting structure. It is easiest to take into consideration inanimate objects, whereas fauna, such as e.g. plants or crops, may change their height, and may even not be there or not be visible at the time of installation of the solar PV panel mounting structure. For any solar PV panel mounting structures that are configured to have its one or more solar PV panels at an angle, e.g. fixed angle or tracking the sun, the requirements for a minimum distance between the one or more solar PV panels and the ground means that the solar PV panel mounting structure becomes even taller. The taller a solar PV panel mounting structure is, the more difficult it becomes to install and service. For example, a single axis solar tracker with a solar PV panel module of two-by-seven solar PV panels configured to tilt around the longer of the spanned directions can have an operating distance from ground to solar panels at zero degrees tilting of more than 2.5 meters as detailed further below.

The illustrated support structure assembly is configured to have a plurality of elevation modes, wherein an operational mode comprises the support structure assembly being in a configuration suitable for normal operation of the solar PV panel mounting structure and a service mode comprises the support structure assembly being in a configuration suitable for installation and/or maintenance of the solar PV panel mounting structure such as installation and/or maintenance of the one or more solar PV panels. In some embodiments, the operational mode comprises the one or more solar PV panels being at an elevation above ground suitable for normal operation. In some embodiments, the service mode comprises one or more of the one or more support structures being at a lower elevation than when in the operational elevation. For example, the service mode may comprise the second support structure being at a lower elevation than when it is in the operational elevation. In some embodiments, the operational mode comprises the one or more solar panels being at an average elevation above the surface of 1.7 meters or more, such as 1.8 meters or more, such as 1.9 meters or more, such as 2 meters or more, such as 2.2 meters or more, such as 2.4 meters or more, such as 2.5 meters or more. For (as an example) two solar panels arranged next to each other in a vertical/heigh direction, the average elevation will typically be between them or the middle of their combined extent. For embodiments, where the solar panels can tilt, the average elevation is typically the length from the ground to the rotation/torque axis or close thereto, although some embodiments may have the solar panels being offset in relation to the rotation/torque axis, which would change the average elevation. In some embodiments, the service mode comprises the one or more solar panels, when installed, being at an average elevation above the surface of 1 meters or less, such as 1.5 meters or less, such as 1.75 meters or less, such as 1.85 meters or less, such as 1.9 meters or less, such as 2 meters or less, such as 2.5 meters or less, such as 3 meters or less. In some embodiments, the support structure assembly is further configured to have a difference in average elevation of the one or more solar panels, when installed, between the operational mode and the service mode of 0.2 meter or more, such as 0.3 meter or more, such as 0.4 meter or more, such as 0.5 meter or more, such as 0.7 meter or more, such as 1 meter or more, such as 1.2 meter or more, such as 1.5 meter or more. In any elevation mode, the one or more solar panels may be at an angle, e.g. at an angle to a surface on which the support structure assembly supports the one or more solar panels or at an angle to a part of the support structure assembly, such as to the first or second support structure, for at least part of the time. The average elevation of the one or more solar panels may be substantially equal to a height of a rotation axis. In other cases, the one or more solar panels may be positioned so as to be shifted relative to a rotation axis.

In some embodiments, the support structure assembly comprises a plurality of operational modes respectively at different elevations and the service mode is of lower elevation than all the operational modes.

By providing for a service mode in which the second support structure is in a configuration, such as at an elevation, suitable for installation and/or maintenance of the solar PV panel mounting structure (in particular for a service mode being at a lower elevation than the one or more operational modes), a significant drawback of solar PV panel mounting structures is mitigated, or possibly even removed. Maintenance may entail any of updating, retrofitting, upkeep, and repair.

In some embodiments, the support structure assembly comprises an elevation construct, the elevation construct being configured to change the height of one or more of the one or more support structures so as to change the elevation of the one or more solar PV panels. The elevation construct may comprise one or more of: a telescopic construct, a sliding construct, a linkage construct, or a folding construct. The elevation construct may be comprised in or be part of the first support structure. The elevation construct is configured to provide flexibility in adjusting the height of at least part of the support structure assembly. The specific choice of elevation construct depends on factors such as e.g. desired adjustability and structural requirements.

It is known to build a support structure assembly as a modular construct comprising separate segments of fixed dimensions that can be added during installation to achieve a desired height of the support structure assembly. Such a support structure assembly cannot provide a plurality of elevation modes.

A telescopic construct comprises two or more segments, where one segment is configured to move within the other segment. A sliding construct comprises two or more segments that can slide relative to each other to adjust the overall length. This can be achieved through sliding tracks or rails that allow the segments to move back and forth, enabling length adjustment. A linkage construct comprises a series of interconnected links or arms that can be folded or unfolded to adjust the overall length. By manipulating the angles and positions of the links, it is possible to change the configuration and alter the overall length of the construct. A folding construct comprises multiple parts that can be folded or unfolded to change the length. This is commonly seen in foldable tables or chairs where the legs or sections can be folded to reduce the size for storage or transportation. Another example of a folding construct is a pivoting construct, where one segment can pivot in relation to another thereby reducing the length in one direction, while possibly increasing another length.

According to the invention, the support structure assembly comprises a lifting installation configured for temporary installation of lifting equipment. The lifting installation may be comprised in the first support structure. As lifting equipment may be used e.g. a hydraulic pump with suitable accessories. In at least some embodiments, the lifting installation is permanently internal to or integrated in/with the first support structure or the overall solar PV panel mounting structure or at least permanently fixed thereto. The permanent lifting installation may comprise or use a removable lifting element such as a hydraulic cylinder or similar.

In some embodiments, no external tools or machinery is needed or necessary for shifting between the operational mode(s) and the service mode, or at least for shifting from an operational mode to the service mode.

In some embodiments, the second support structure is configured such that the solar **PV** panels can slide into place whereby (with an elevation service mode being lower than the operational mode(s)) lifting of the solar **PV** panels above waist height of the technician can be avoided.

In some embodiments, the lowermost part of the solar **PV** panels above ground is about 60 to 80 cm (at a maximum tilt of 60 degrees), which would make the operational height of the rotation axis (for solar **PV** panels installed symmetrically about the torque axis) to be around 240 - 280 cm, e.g. 260 cm, where the operational height will vary depending on the particular physical dimensions of the respective solar **PV** panels.

According to a further aspect of the present invention is provided a method of installation of a solar photovoltaic (PV) panel mounting structure according to claim 10, the solar PV panel mounting structure comprising:
- one or more solar PV panels,
- a support structure assembly configured to support the one or more solar PV panels on a surface**,** the support structure assembly being further configured to have a plurality of elevation modes, where each elevation mode comprises the one or more solar PV panels being at an elevation above the surface that is different from their elevation in the other elevation mode(s), the plurality of elevation modes comprising:
   ∘ an operational mode in which the support structure assembly is in a configuration suitable for normal operation of the solar PV panel mounting structure, and
   ∘ a service mode in which the support structure assembly is in a configuration suitable for installation and/or maintenance of the solar PV panel mounting structure,
wherein the method comprises the steps of:
- installing the support structure assembly,
- installing the one or more solar PV panels, wherein the support structure assembly is in the service mode during installation of the one or more solar PV panels, and
- changing the elevation mode of the support structure assembly to the operational mode, whereby the one or more solar PV panels are elevated to their operating elevation.

The solar PV panel mounting structure of the installation method is a solar PV panel mounting structure according to any of claims 1-9.

According to a further aspect of the present invention is provided a method of servicing a solar photovoltaic (PV) panel mounting structure according to claim 11, the solar PV panel mounting structure comprising:
- one or more solar PV panels,
- a support structure assembly configured to support the one or more solar PV panels on a surface**,** the support structure assembly being further configured to have a plurality of elevation modes, where each elevation mode comprises the one or more solar PV panels being at an elevation above the surface that is different from their elevation in the other elevation mode(s), the plurality of elevation modes comprising:
   ∘ an operational mode in which the support structure assembly is in a configuration suitable for normal operation of the solar PV panel mounting structure, and
   ∘ a service mode in which the support structure assembly is in a configuration suitable for installation and/or maintenance of the solar PV panel mounting structure,
wherein the method comprises the steps of:
- changing the elevation mode of the support structure assembly to the service mode (typically from an operational mode), whereby the elevation of the one or more solar PV panels is decreased,
- performing service on the solar PV panel mounting structure, and
- changing the elevation mode of the support structure assembly to the operational mode, whereby the one or more solar PV panels are elevated to their operating elevation.

The solar PV panel mounting structure of the method of servicing is a solar PV panel mounting structure according to any of claims 1-9.

Some further embodiments and advantages are mentioned throughout the present specification in relation to the Figures and are meant to be included here.

### Definitions

All headings and sub-headings are used herein for convenience only and should not be constructed as limiting the invention in any way.

The use of any and all examples, or exemplary language provided herein, is intended merely to better illuminate the invention and does not pose a limitation on the scope of the invention unless otherwise claimed. No language in the specification should be construed as indicating any non-claimed element as essential to the practice of the invention.

### Brief description of the drawings

Figures 1A and 1B schematically illustrate a side and front view, respectively, of an example of a solar photovoltaic (PV) panel mounting structure comprising a solar PV panel module with an array of panels;
Figure 2 schematically illustrates a side view of another example of a solar photovoltaic (PV) panel mounting structure comprising a solar PV panel module with an array of panels;
Figures 3A-D schematically illustrate a solar PV panel mounting structure according to some embodiments and a method of installation of a solar PV panel mounting structure according to some embodiments as disclosed herein;
Figures 4 and 5 schematically illustrate a solar PV panel mounting structure according to some embodiments as disclosed herein; and
Figure 6 schematically illustrates steps of a method of installation of a solar PV panel mounting structure according to some embodiments as disclosed herein;

### Detailed description

Various aspects and embodiments of a solar photovoltaic (PV) panel mounting structure, a method of installation of a solar photovoltaic panel mounting structure, and a method of servicing a solar photovoltaic panel mounting structure as disclosed herein will now be described with reference to the figures.

When/if relative expressions such as "upper" and "lower", "right" and "left", "horizontal" and "vertical", "clockwise" and "counter clockwise" or similar are used in the following terms, these typically refer to the appended figures and not necessarily to an actual situation of use. The shown figures are schematic representations for which reason the configuration of the different structures as well as their relative dimensions are intended to serve illustrative purposes unless stated otherwise.

Some components may only be disclosed in relation to a single embodiment of the invention, but may be meant to be included in the other embodiments without further explanation.

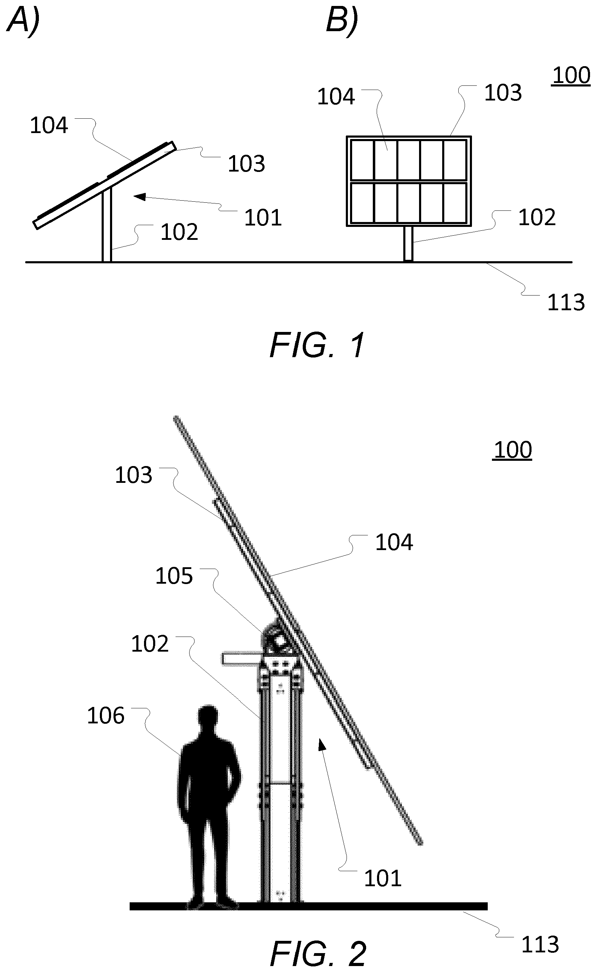

Figures 1A and 1B schematically illustrate a side and front view, respectively, of an example of a solar photovoltaic (PV) panel mounting structure comprising a solar PV panel module with an array of panels.

Illustrated is a solar photovoltaic (PV) panel mounting structure 100 as generally known comprising a number, sometimes quite large number, of separate solar PV panels 104 arranged in a suitable array, grid, layout, etc. in a solar PV panel module as generally known. In the illustrated example, the solar PV panels 104 are arranged in a so-called 2-portrait (2P) arrangement, where two rows of solar PV panels are arranged in portrait orientation in each row.

The solar PV panels 104 are supported by a support structure assembly comprising a first support structure 102 and a second support structure 103. The support structure assembly supports the solar PV panels 104 on a surface 113 such as the ground. The surface/ground may in particular be uneven and/or soft. The first support structure 102 supports the second support structure 103, which supports the solar PV panels 104. The first support structure 102 is secured in or on the surface 113. The second support part 103 may e.g. be a frame or the like having a particular inclination optimising the received solar energy. Alternatively, the support structure assembly may comprise or be coupled to a solar tracking device configured to dynamically orient/adjust the one or more solar PV panels towards the sun.

Figure 2 schematically illustrates a side view of another example of a solar photovoltaic (PV) panel mounting structure comprising a solar PV panel module with an array of panels.

The solar PV panel mounting structure 100 comprises one or more solar PV panels 104 and a support structure assembly. The solar PV panels 104 are supported by the support structure assembly comprising a first support structure 102 and a second support structure 103. The support structure assembly supports the solar PV panels 104 on a surface 113 such as the ground. As mentioned, the surface/ground may in particular be uneven and/or soft. The first support structure 102 supports the second support structure 103, which supports the solar PV panels 104. The first support structure 102 is secured in or on the surface 113.

The support structure assembly comprises a solar tracking device comprising a torque-transfer drive 105 configured to orient the solar PV panels towards the sun. Also shown in Fig. 2 is a person of average height next to the solar PV panel mounting structure illustrating the height of the solar PV panel mounting structure at normal operation, i.e. in an operational mode, which makes installation and service labour-intensive tasks. In other embodiments, the height of the solar PV panel mounting structure at normal operation may be even greater, e.g. for AgriPV uses/situations. Furthermore, the surface on which the solar PV panel mounting structure is constructed may be uneven and/or soft making it difficult to use e.g. lifts or cranes to lift people or equipment to the operating height of the supporting structure assembly. In case of several rows of solar PV panel mounting structure, ('tightly') packed to optimise ground area usage, it may also be difficult to have sufficient room for lifts, cranes, etc.

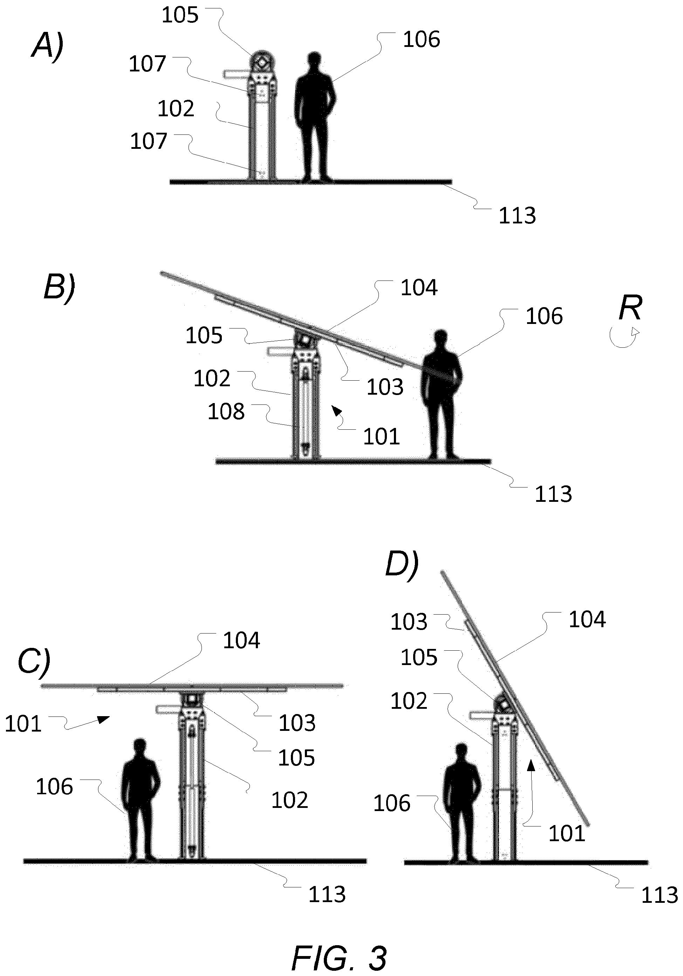

Figures 3A-D schematically illustrate a solar PV panel mounting structure according to some embodiments and a method of installation of a solar PV panel mounting structure according to some embodiments as disclosed herein;

The solar PV panel mounting structure 100 shown in Fig. 3 may be similar to the one described in connection with Fig. 2.

In Fig. 3A, a first support structure 102 has been secured in or on the surface 113, for example by ramming. The first support structure 102 comprises a telescopic construct, which provides an extension and retraction function of the first support structure 102 by one part moving inside another part. Coupled to the first support structure 102 is a torque-transfer drive 105 that is part of a solar tracking device. Comprised in the first support structure 102 is a lifting installation 107, which is configured for installation of a removable lifting element such as or in particular being a hydraulic cylinder. In at least some embodiments, the lifting installation 107 is integrated in/with the first support structure 102 or the overall solar PV panel mounting structure or at least fixed thereto.

A technician 106, who is working on the installation of the solar PV panel mounting structure, is able to easily reach the torque-transfer drive 105 as the first support structure is at a height that is suitable for working on the installation.

In Fig. 3B, a second support structure 103 has been coupled to the first support structure 102 and to the torque-transfer drive 105. Via the coupling to the torque-transfer drive 105, the second support structure 103 can tilt in relation to the first support structure 102. The solar PV panel mounting structure shown in Fig. 3 may be a single-axis solar tracker seen parallel to the rotation axis R.

In order to install the solar PV panels 104, the second support structure 103 may be tilted slightly to allow the technician 106 to place the solar PV panels. The second support structure 103 is configured such that the solar PV panels can slide into place and lifting of the solar PV panels above waist height of the technician can be avoided. This avoids heavy lifting above waist height as a solar PV panel may weigh e.g. more than 30 kg.

A hydraulic cylinder 108 has been installed and secured in the lifting installation 107 and the solar PV panel mounting structure can be raised into operation elevation using a hydraulic pump coupled to the hydraulic cylinder 108. Before doing so, the tilt of the solar PV panels may be set to substantially zero degrees.

In Fig. 3C, the solar PV panel mounting structure has been raised into operation elevation by extension of the telescopic construct comprised in the first support structure 102. The second support structure 103, torque-transfer drive 105, and solar PV panels 104 are now at too high an elevation for the technician to be able to easily to work on them, if at all. The first support structure has been locked in place by use of suitable fasteners, such as locking bolts, and the lifting equipment can be removed.

In Fig. 3D, the hydraulic cylinder 108 has been removed and the solar PV panel mounting structure is ready for commissioning and quality control prior to beginning normal operation.

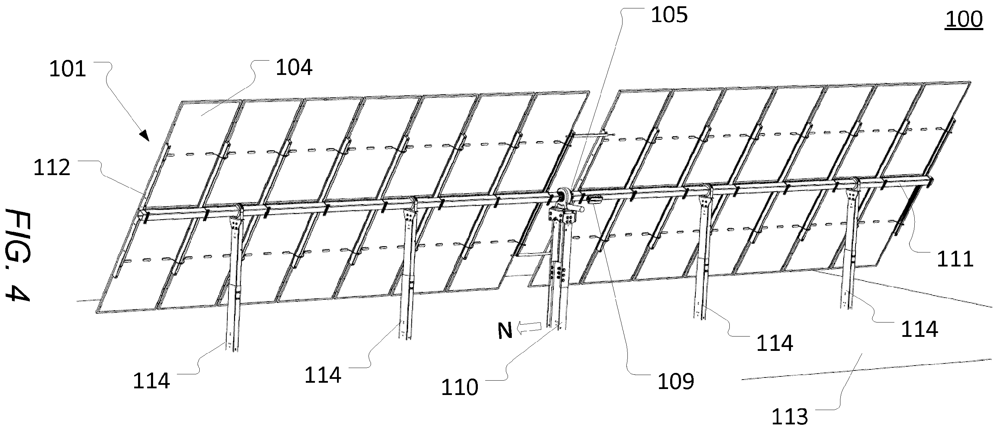

Figure 4 schematically illustrates a solar PV panel mounting structure according to some embodiments as disclosed herein.

The solar PV panel mounting structure shown in Fig. 4 comprises a support structure assembly 101, which supports two modules of solar PV panels, each module comprising two-by-seven solar PV panels 104. The support structure assembly 101 comprises a first support structure comprising, as an example, five piles 110, 114, which have been secured to/into the surface 113 on which the solar PV panel mounting structure 100 is constructed. The five piles 110, 114 are aligned on a substantially north-south line. A second support structure is supported at least in part by the first support structure 110, 114 and comprises two torque tubes 111 and a plurality of transverse beams 112. The torque tubes 111 are coupled to a torque transfer drive 105, which is supported by the central pile 110. Each torque tube 111 is coupled to two of the other piles 114 via a bearing that allows rotation of the torque tube around a torque tube axis. The transverse beams 112 are coupled to the torque tube 111 and extend on each side substantially orthogonally to the torque tube 111 in an east-west orientation. Twenty-eight solar PV panels 104 are coupled to the second support structure such that rotation of the torque tube rotates the solar PV panels 104. The construction is configured such that moment on the solar PV panels, e.g. from wind load, will be transferred to the central pile 110, which therefore has larger dimensions than the other piles 114. The solar PV panel mounting structure 100 comprises a control unit 109 positioned on the torque tube. The control unit 109 controls the rotation of the torque tube, and thereby the rotation of the solar PV panels.

The solar PV panel mounting structure 100 is a single-axis 2P solar tracker as the solar PV panels 104 are arranged in a so-called 2-portrait (2P) arrangement, where two rows of solar PV panels are arranged in portrait orientation in each row. With example dimensions of each solar PV panel of 130 cm-by-238 cm and a desired height above the ground of about 60 to 80 cm of the lowermost part of the solar PV panels at a maximum tilt of 60 degrees, the operational height of the rotation axis is around 260 cm as the solar PV panels are installed symmetrically about the torque axis. A height of around 2.6 meters makes it quite difficult for technicians to work on the parts of the solar PV panel mounting structure, which are at, or close to, the height of the rotation axis or above, such as e.g. the torque tube 111, bearings, transverse beams 112, control unit 109, and solar PV panels 104. Although the solar PV panels 104 themselves or part thereof may be more easily reached when they are tilted, a relatively large tilt is required, which makes e.g. replacement difficult as the solar PV panels are heavy, delicate, and expensive. The other parts of the solar PV panel mounting structure, such as e.g. torque-transfer drive and torque tube may also be quite heavy and difficult to manoeuvre during installation, replacement, or other service, even more so the greater the height at which the torque drive or tube is at.

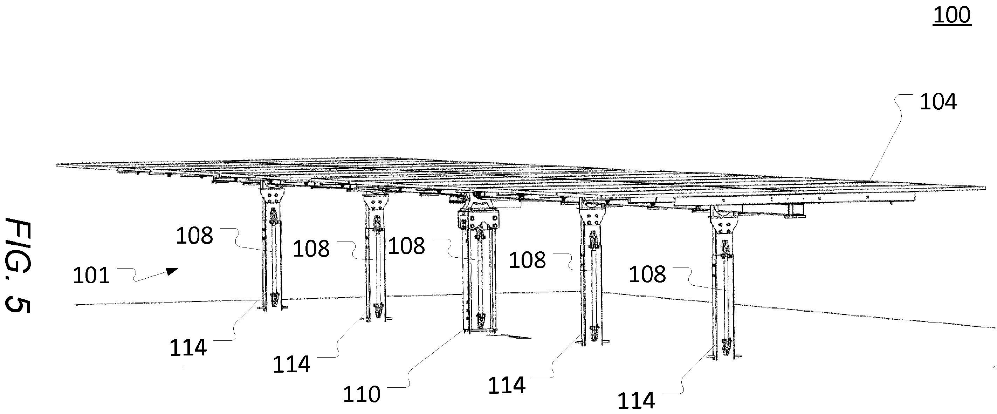

Figure 5 schematically illustrates a solar PV panel mounting structure according to some embodiments as disclosed herein.

The solar PV panel mounting structure 100 shown in Fig. 5 may be similar to the one shown in Fig. 4. In Fig. 5, the solar PV panel mounting structure is shown in a side view and at an elevation suitable for installation or service, while the solar PV panel mounting structure 100 shown in Fig. 4 is at a higher elevation, possibly at an elevation suitable for normal operation. The piles 110, 114 comprise an elevation construct such as a telescopic construct, which allows for the length of the piles 110, 114 to be changed thereby diminishing or increasing the elevation of the solar PV panels 104. Each pile 110, 114 may comprise a lower pile and an upper pile, where one of the two can slide inside the other thus achieving the extending and retracting function of the telescopic construct.

In Fig. 5, the five piles 110, 114 each have a hydraulic cylinder 108 coupled to it, which, when coupled to a hydraulic pump, can extend or retract the telescopic construct in the piles 110, 114 to change the elevation mode. The hydraulic cylinders may be detached and removed after use. Instead of a hydraulic lifting system, other known (e.g. or preferably integrated or internal) lifting systems may be used.

The support structure assembly 101 may be configured such that a change in elevation, e.g. from one elevation mode to another elevation mode, can be done in a single step or in multiple steps, i.e. in increments of a desired elevation. For example, one or more of the piles 110, 114, which are part of the first support structure, may comprise one or more securing structures configured to secure the pile at a given elevation, where the elevation may or may not correspond to an elevation of an elevation mode (but at least one elevation will correspond to an elevation mode). Alternatively, or additionally, the second support structure may comprise one or more securing structures. The one or more securing structures may be configured to allow an increase in elevation, but not a decrease in elevation.

As an example, the piles 110, 114 may comprise holes in one or both of the lower and upper pile, which, when aligned, can be used to secure the pile at an elevation using a fastening means. A fastening means, such as e.g. a bolt, through at least one hole in the lower pile and at least one hole in the upper pile may be used to secure the support structure assembly at a fixed elevation. Alternatively, a fastening means, such as a bolt, may support the upper pile in place against movement downwards, while allowing movement upwards. By providing securing structures that allow the support structure assembly to be secured at one or more elevations, which is not the desired final elevation, the lifting system may be simplified. For example, when using hydraulic cylinders or the like, each cylinder may be made shorter, and thereby more compact, as it needs only be able to extend a pile part of the way to the final desired elevation. Following a part-way extension and securing of the support structure assembly, each hydraulic cylinder may be detached, retracted and re-attached to a pile, whereby it is able to elevate the pile further during a multi-step elevation.

The solar PV panel mounting structure as shown in Fig. 5 is in its service mode in which the support structure assembly is in a configuration suitable for installation and/or maintenance of the solar PV panel mounting structure. For example, the height of the torque tube in the service mode may be around 130 cm. Thus, the service mode allows technicians to more easily and securely work on the parts of the solar PV panel mounting structure 100, which is otherwise difficult to reach, when the solar PV panel mounting structure is in its operational mode. The solar PV panels 104 are shown at zero degrees tilt in Fig. 5, but may be tilted during service or installation to ease the work being done.

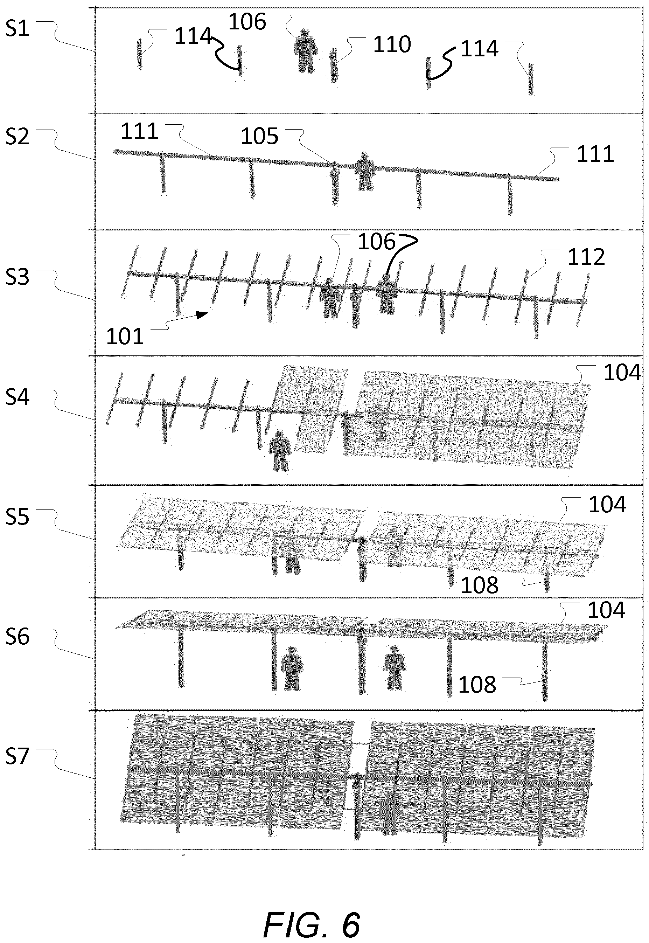

Figure 6 illustrates steps of a method of installation of a solar PV panel mounting structure as disclosed herein.

The solar PV panel mounting structure 100 being installed using the method steps shown in Fig. 6 may be similar to the solar PV panel mounting structure shown in Figs. 4 and 5.

In step S1, the lower piles of the central pile 110 and other piles 114 are rammed into the surface, such as the ground, at pre-defined distances to each other and aligned along a predetermined orientation/direction, e.g. a north-west orientation. The technician 106 takes care not to damage the lower piles during ramming as this may cause problems in the next step, where the telescopic pile is assembled requiring that the lower piles and upper piles are able to move smoothly relative to each other.

In step S2, an upper pile is installed on or in each lower pile such that it can move smoothly up and down, which allows the structure to lift. A torque-transfer drive 105 is installed on the central pile 110 and a bearing for a torque tube 111 is installed on each of the other piles 114. Following alignment of bearings and torque-transfer drive, two torque tubes, one at either side of the torque-transfer drive can be installed and coupled to the bearings and the torque-transfer drive.

In step S3, transverse beams 112 are coupled to the torque tube 111 and extend on each side of the torque tube substantially orthogonally to the torque tube 111 in a predetermined orientation/direction, e.g. an east-west orientation. The support structure assembly 101 is now ready to support one or more solar PV panels.

In step S4, solar PV panels are installed by coupling them to the transverse beams. The transverse beams can be rotated e.g. 20-30° down on one side from which to start the installation of solar PV panels. This makes it possible for the two technicians 106 to push the solar PV panels 104 up on the transverse beams one at a time. In this way, heavy lifting above the waist is avoided.

In step S5, the electrical installation is performed, which comprises grounding the support structure assembly 101 and connecting the solar PV panels. Additionally, a control unit (not shown; see e.g. 109 in Fig. 4) configured to control the torque-transfer drive is installed. The electrical installation may require a skilled technician, but the solar PV panels, the torque tubes 111, etc. are easy to reach as the support structure assembly is in its service mode (being at lower elevation than the operational mode(s)), where its elevation is suitable for installation and/or maintenance of the solar PV panel mounting structure. After electrical installation work has finished, lifting equipment, such as hydraulic cylinders 108, is installed at one or more piles 110, 114.

In step S6, the support structure assembly is raised using the lifting equipment 108 such that the solar PV panels are brought to a higher elevation. The support structure assembly 101 may be raised to an elevation for normal operation in one go, or intermediate elevation heights may be necessary, e.g. because of constraints of the lifting equipment used. When the solar PV panels 104 are at their operating elevation, the support structure assembly is secured in place.

In step S7, quality control of the solar PV panel mounting structure is performed. For example, the rotation of the torque tubes may be tested to ensure that the solar PV panels 104 can move the full range without any problems, and/or bolted connections may be inspected. If the solar PV panel mounting structure passes all quality controls it is ready for normal operation and can then subsequently be put in its or one of its operational modes.

Some preferred embodiments have been shown in the foregoing, but it should be stressed that the invention is not limited to these, but may be embodied in other ways within the subject matter defined in the following claims.

In the claims enumerating several features, some or all of these features may be embodied by one and the same element, component or item. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, elements, steps or components but does not preclude the presence or addition of one or more other features, elements, steps, components or groups thereof.

### List of references

- 100: Solar photovoltaic (PV) panel mounting structure
- 101: Support structure assembly
- 102: First support structure
- 103: Second support structure
- 104: Solar photovoltaic (PV) panel(s)
- 105: Torque-transfer drive
- 106: Person/Technician
- 107: Lifting installation
- 108: Lifting equipment
- 109: Control Unit
- 110: Central pile
- 111: Torque tube
- 112: Transverse beam
- 113: Surface
- 114: Pile
- R: Rotation axis

## Claims

1. A solar photovoltaic (PV) panel mounting structure (100), the solar PV panel mounting structure (100) comprising:
- one or more solar PV panels (104),
- a support structure assembly (101) comprising one or more support structures (102, 103, 110, 114),
the support structure assembly configured to support the one or more solar PV panels on a surface (113),
wherein the support structure assembly is further configured to have a plurality of elevation modes, each elevation mode comprising the one or more solar PV panels being at an elevation above the surface that is different from their elevation in the other elevation mode(s), the plurality of elevation modes comprising:
- an operational mode in which the support structure assembly is in a configuration suitable for normal operation of the solar PV panel mounting structure, and
- a service mode in which the support structure assembly is in a configuration suitable for installation and/or maintenance of the solar PV panel mounting structure,
wherein the support structure assembly comprises
- an elevation construct, the elevation construct configured to change the height of one or more of the one or more support structures so as to change the elevation of the one or more solar PV panels, **characterised in that** the support structure assembly comprises a lifting installation (107) configured for temporary installation of lifting equipment (108),
wherein the elevation construct, the lifting installation (107), and the temporary lifting equipment (108) are configured to change the elevation of the one or more solar PV panels.

2. A solar PV panel mounting structure (100) according to claim 1, wherein the elevation construct comprises one or more of: a telescopic construct, a sliding construct, a linkage construct, or a folding construct.

3. A solar PV panel mounting structure (100) according to any of the previous claims, wherein the operational mode comprises the one or more solar PV panels being at an elevation above ground suitable for normal operation.

4. A solar PV panel mounting structure (100) according to any of the previous claims, wherein the service mode comprises one or more of the one or more support structures being at a lower elevation than when in the operational elevation.

5. A solar PV panel mounting structure (100) according to any of the previous claims, wherein the support structure assembly comprises a torque-transfer drive (105) configured for tilting of the one or more solar PV panels around one or more axes.

6. A solar PV panel mounting structure (100) according to any of the previous claims, wherein any of the two dimensions of an area spanned by one or more of the one or more solar PV panels is equal to or larger than 2 meters, such as larger than 3 meters, such as larger than 4 meters, such as larger than 5 meters.

7. A solar PV panel mounting structure (100) according to any of the previous claims, wherein the operational mode comprises the one or more solar panels being at an average elevation above the surface of 1.7 meters or more, such as 1.8 meters or more, such as 1.9 meters or more, such as 2 meters or more, such as 2.2 meters or more, such as 2.4 meters or more, such as 2.5 meters or more.

8. A solar PV panel mounting structure (100) according to any of the previous claims, wherein the service mode comprises the one or more solar panels, when installed, being at an average elevation above the surface of 1 meters or less, such as 1.5 meters or less, such as 1.75 meters or less, such as 1.85 meters or less, such as 1.9 meters or less, such as 2 meters or less, such as 2.5 meters or less, such as 3 meters or less.

9. A solar PV panel mounting structure (100) according to any of the previous claims, wherein the support structure assembly is further configured to have a difference in average elevation of the one or more solar panels, when installed, between the operational mode and the service mode of 0.2 meter or more, such as 0.3 meter or more, such as 0.4 meter or more, such as 0.5 meter or more, such as 0.7 meter or more, such as 1 meter or more, such as 1.2 meter or more, such as 1.5 meter or more.

10. A method of installation of a solar photovoltaic (PV) panel mounting structure (100), wherein the solar PV panel mounting structure is a solar PV panel mounting structure according to any of claims 1-9 wherein the method comprises the steps of:
- installing the support structure assembly,
- installing the one or more solar PV panels, wherein the support structure assembly is in the service mode during installation of the one or more solar PV panels, and
- changing the elevation mode of the support structure assembly to the operational mode, whereby the one or more solar PV panels are elevated to their operating elevation.

11. A method of servicing a solar photovoltaic (PV) panel mounting structure (100), wherein the solar PV panel mounting structure is a solar PV panel mounting structure according to any of claims 1-9 wherein the method comprises the steps of:
- changing the elevation mode of the support structure assembly to the service mode, whereby the elevation of the one or more solar PV panels is decreased,
- performing service on the solar PV panel mounting structure, and
- changing the elevation mode of the support structure assembly to the operational mode, whereby the one or more solar PV panels are elevated to their operating elevation.

## Patentansprüche

1. Solar-Photovoltaik- (PV) Modul-Montagestruktur (100), wobei die Solar-PV-Modul-Montagestruktur (100) umfasst:
- ein oder mehrere Solar-PV-Module (104),
- eine Trägerstrukturanordnung (101), die eine oder mehrere Trägerstrukturen (102, 103, 110, 114) umfasst,
wobei die Trägerstrukturanordnung so konfiguriert ist, dass sie das eine oder die mehreren Solar-PV-Module auf einer Oberfläche (113) trägt,
wobei die Trägerstrukturanordnung ferner so konfiguriert ist, dass sie eine Vielzahl von Höhenlagemodi aufweist, wobei sich in jedem Höhenlagemodus das eine oder die mehreren Solar-PV-Module in einer Höhenlage über der Oberfläche befinden, die sich von deren Höhenlage in den anderen Höhenlagemodi unterscheidet, wobei die mehreren Höhenlagemodi umfassen:
- einen Betriebsmodus, in dem sich die Trägerstrukturanordnung in einer Konfiguration befindet, die für einen normalen Betrieb der Solar-PV-Modul-Montagestruktur geeignet ist, und
- einen Wartungsmodus, in dem sich die Trägerstrukturanordnung in einer Konfiguration befindet, die für eine Installation und/oder Wartung der Solar-PV-Modul-Montagestruktur geeignet ist,
wobei die Trägerstrukturanordnung umfasst
- eine Höhenlagekonstruktion, wobei die Höhenlagekonstruktion so konfiguriert ist, dass sie die Höhe einer oder mehrerer der einen oder mehreren Trägerstrukturen ändert, um die Höhenlage des einen oder der mehreren Solar-PV-Module zu ändern, **dadurch gekennzeichnet, dass** die Trägerstrukturanordnung eine Hebeinstallation (107) umfasst, die zur temporären Installation von Hebeausrüstung (108) konfiguriert ist,
wobei die Höhenlagekonstruktion, die Hebeinstallation (107) und die temporäre Hebeausrüstung (108) so konfiguriert sind, dass sie die Höhenlage des einen oder der mehreren Solar-PV-Module verändern können.

2. Solar-PV-Modul-Montagestruktur (100) nach Anspruch 1, wobei die Höhenlagekonstruktion eines oder mehrere umfasst von: einer Teleskopkonstruktion, einer Gleitkonstruktion, einer Verbindungskonstruktion oder einer Klappkonstruktion.

3. Solar-PV-Modul-Montagestruktur (100) nach einem der vorstehenden Ansprüche, wobei der Betriebsmodus umfasst, dass sich das eine oder die mehreren Solar-PV-Module in einer Höhenlage über dem Boden befinden, die für normalen Betrieb geeignet ist.

4. Solar-PV-Modul-Montagestruktur (100) nach einem der vorstehenden Ansprüche, wobei der Wartungsmodus umfasst, dass sich eine oder mehrere der einen oder mehreren Trägerstrukturen in einer niedrigeren Höhenlage befinden, als wenn in der Betriebshöhenlage befinden.

5. Solar-PV-Modul-Montagestruktur (100) nach einem der vorstehenden Ansprüche, wobei die Trägerstrukturanordnung einen Drehmomentübertragungsantrieb (105) umfasst, der dazu konfiguriert ist, das eine oder die mehreren Solar-PV-Module um eine oder mehrere Achsen zu neigen.

6. Solar-PV-Modul-Montagestruktur (100) nach einem der vorstehenden Ansprüche, wobei eine der zwei Dimensionen einer Fläche, die von einem oder mehreren des einen oder der mehreren Solar-PV-Module überspannt wird, gleich oder größer als 2 Meter, beispielsweise größer als 3 Meter, beispielsweise größer als 4 Meter, beispielsweise größer als 5 Meter ist.

7. Solar-PV-Modul-Montagestruktur (100) nach einem der vorstehenden Ansprüche, wobei der Betriebsmodus umfasst, dass sich das eine oder die mehreren Solarmodule in einer durchschnittlichen Höhe über der Oberfläche von 1,7 Metern oder mehr, beispielsweise 1,8 Metern oder mehr, beispielsweise 1,9 Metern oder mehr, beispielsweise 2 Metern oder mehr, beispielsweise 2,2 Metern oder mehr, beispielsweise 2,4 Metern oder mehr, beispielsweise 2,5 Metern oder mehr befinden.

8. Solar-PV-Modul-Montagestruktur (100) nach einem der vorstehenden Ansprüche, wobei der Betriebsmodus umfasst, dass sich das eine oder die mehreren Solarmodule, wenn sie installiert sind, in einer durchschnittlichen Höhenlage über der Oberfläche von 1 Meter oder weniger, beispielsweise 1,5 Metern oder weniger, beispielsweise 1,75 Metern oder weniger, beispielsweise 1,85 Metern oder weniger, beispielsweise 1,9 Metern oder weniger, beispielsweise 2 Metern oder weniger, beispielsweise 2,5 Metern oder weniger, beispielsweise 3 Metern oder weniger befinden.

9. Solar-PV-Modul-Montagestruktur (100) nach einem der vorstehenden Ansprüche, wobei die Trägerstrukturanordnung ferner so konfiguriert ist, dass sie einen Unterschied in der durchschnittlichen Höhenlage des einen oder der mehreren Solarmodule, wenn sie installiert sind, zwischen dem Betriebsmodus und dem Wartungsmodus von 0,2 Metern oder mehr, beispielsweise 0,3 Metern oder mehr, beispielsweise 0,4 Metern oder mehr, beispielsweise 0,5 Metern oder mehr, beispielsweise 0,7 Metern oder mehr, beispielsweise 1 Metern oder mehr, beispielsweise 1,2 Metern oder mehr, beispielsweise 1,5 Metern oder mehr aufweist.

10. Verfahren zur Installation einer Solar-Photovoltaik- (PV) Modul-Montagestruktur (100), wobei die Solar-PV-Modul-Montagestruktur eine Solar-PV-Modul-Montagestruktur nach einem der Ansprüche 1-9 ist,
wobei das Verfahren die folgenden Schritte umfasst:
- Installieren der Trägerstrukturanordnung,
- Installieren des einen oder der mehreren Solar-PV-Module, wobei sich die Trägerstrukturanordnung während der Installation des einen oder der mehreren Solar-PV-Module im Wartungsmodus befindet, und
- Umschalten des Höhenlagemodus der Trägerstrukturanordnung in den Betriebsmodus, wodurch das eine oder die mehreren Solar-PV-Module auf ihre Betriebshöhenlage angehoben werden.

11. Verfahren zur Wartung einer Solar-Photovoltaik- (PV) Modul-Montagestruktur (100), wobei die Solar-PV-Modul-Montagestruktur eine Solar-PV-Modul-Montagestruktur nach einem der Ansprüche 1-9 ist,
wobei das Verfahren die folgenden Schritte umfasst:
- Umschalten des Höhenlagemodus der Trägerstrukturanordnung in den Wartungsmodus, wodurch die Höhenlage des einen oder der mehreren Solar-PV-Module gesenkt wird,
- Durchführen von Wartungsarbeiten an der Solar-PV-Modul-Montagestruktur, und
- Umschalten des Höhenlagemodus der Trägerstrukturanordnung in den Betriebsmodus, wodurch das eine oder die mehreren Solar-PV-Module auf ihre Betriebshöhenlage angehoben werden.

## Revendications

1. Structure de montage de panneau photovoltaïque (PV) solaire (100), la structure de montage de panneau PV solaire (100) comprenant :
- un ou plusieurs panneaux PV solaires (104),
- un ensemble de structure de support (101) comprenant une ou plusieurs structures de support (102, 103, 110, 114),
l'ensemble de structure de support configuré pour supporter un ou plusieurs panneaux PV sur une surface (113),
dans laquelle l'ensemble de structure de support est en outre configuré pour présenter une pluralité de modes d'élévation, chaque mode d'élévation comprenant les un ou plusieurs panneaux PV solaires à une élévation au-dessus de la surface différente de leur élévation dans le(s) autre(s) mode(s) d'élévation, la pluralité de modes d'élévation comprenant :
- un mode de fonctionnement dans lequel l'ensemble de structure de support est dans une configuration adaptée au fonctionnement normal de la structure de montage de panneau PV solaire, et
- un mode de service dans lequel l'ensemble de la structure de support est dans une configuration adaptée à l'installation et/ou entretien de la structure de montage de panneau PV solaire,
dans laquelle l'ensemble de structure de support comprend
- une construction d'élévation, la construction d'élévation étant configurée pour modifier la hauteur d'une ou plusieurs des une ou plusieurs structures de support afin de modifier l'élévation des un ou plusieurs panneaux PV solaires, **caractérisée en ce que** l'ensemble de structure de support comprend une installation de levage (107) configurée pour l'installation temporaire d'un équipement de levage (108),
dans laquelle la construction d'élévation, l'installation de levage (107) et l'équipement de levage temporaire (108) sont configurés pour modifier l'élévation des un ou plusieurs panneaux PV solaires.

2. Structure de montage de panneau PV solaire (100) selon la revendication 1, dans laquelle la construction d'élévation comprend une ou plusieurs parmi : une construction télescopique, une construction coulissante, une construction de liaison ou une construction pliante.

3. Structure de montage de panneau PV solaire (100) selon l'une quelconque des revendications précédentes, dans laquelle le mode de fonctionnement comprend les un ou plusieurs panneaux PV solaires situés à une élévation au-dessus du sol adaptée à un fonctionnement normal.

4. Structure de montage de panneau PV solaire (100) selon l'une quelconque des revendications précédentes, dans laquelle le mode de service comprend une ou plusieurs parmi les une ou plusieurs structures de support étant à une élévation inférieure à celle de l'élévation de fonctionnement.

5. Structure de montage de panneau PV solaire (100) selon l'une quelconque des revendications précédentes, dans laquelle l'ensemble de structure de support comprend un entraînement de transfert de couple de rotation (105) configuré pour incliner les un ou plusieurs panneaux PV solaires autour d'un ou plusieurs axes.

6. Structure de montage de panneau PV solaire (100) selon l'une quelconque des revendications précédentes, dans laquelle l'une quelconque des deux dimensions d'une zone couverte par un ou plusieurs des un ou plusieurs panneaux PV solaires est égale ou supérieure à 2 mètres, tel que supérieure à 3 mètres, tel que supérieure à 4 mètres, tel que supérieure à 5 mètres.

7. Structure de montage de panneau PV solaire (100) selon l'une quelconque des revendications précédentes, dans laquelle le mode de fonctionnement comprend les un ou plusieurs panneaux solaires situés à une élévation moyenne au-dessus de la surface de 1,7 mètre ou plus, tel que 1,8 mètre ou plus, tel que 1,9 mètre ou plus, tel que 2 mètres ou plus, tel que 2,2 mètres ou plus, tel que 2,4 mètres ou plus, tel que 2,5 mètres ou plus.

8. Structure de montage de panneau PV solaire (100) selon l'une quelconque des revendications précédentes, dans laquelle le mode de service comprend les un ou plusieurs panneaux solaires, lorsqu'ils sont installés, étant à une élévation moyenne au-dessus de la surface de 1 mètre ou moins, tel que 1,5 mètre ou moins, tel que 1,75 mètre ou moins, tel que 1,85 mètre ou moins, tel que 1,9 mètre ou moins, tel que 2 mètres ou moins, tel que 2,5 mètres ou moins, tel que 3 mètres ou moins.

9. Structure de montage de panneau PV solaire (100) selon l'une quelconque des revendications précédentes, dans laquelle l'ensemble de structure de support est en outre configuré pour présenter une différence d'élévation moyenne des un ou plusieurs panneaux solaires, lorsqu'ils sont installés, entre le mode de fonctionnement et le mode de service de 0,2 mètre ou plus, tel que 0,3 mètre ou plus, tel que 0,4 mètre ou plus, tel que 0,5 mètre ou plus, tel que 0,7 mètre ou plus, tel que 1 mètre ou plus, tel que 1,2 mètre ou plus, tel que 1,5 mètre ou plus.

10. Procédé d'installation d'une structure de montage de panneau photovoltaïque (PV) solaire (100), dans lequel la structure de montage de panneau PV solaire est une structure de montage de panneau PV solaire selon l'une quelconque des revendications 1-9
dans lequel le procédé comprend les étapes de :
- installation de l'ensemble de structure de support,
- installation des un ou plusieurs panneaux PV solaires, dans lequel l'ensemble de structure de support est dans le mode de service pendant l'installation des un ou plusieurs panneaux PV solaires, et
- modification du mode d'élévation de l'ensemble de structure de support en mode de fonctionnement, selon lequel les un ou plusieurs panneaux PV solaires sont élevés à leur élévation de fonctionnement.

11. Procédé de mise en service d'une structure de montage de panneau photovoltaïque (PV) solaire (100), dans lequel la structure de montage de panneau PV solaire est une structure de montage de panneau PV solaire selon l'une quelconque des revendications 1-9
dans lequel le procédé comprend les étapes de :
- modification du mode d'élévation de l'ensemble de structure de support en mode de service, selon lequel l'élévation des un ou plusieurs panneaux PV solaires est diminuée,
- réalisation de l'entretien de la structure de montage des panneaux PV solaires, et
- modification du mode d'élévation de l'ensemble de structure de support en mode de fonctionnement, selon lequel les un ou plusieurs panneaux PV solaires sont élevés à leur élévation de fonctionnement.
